# EUROPÄISCHE PATENTSCHRIFT

(11) **EP 1 817 645 B1**
(45) Veröffentlichungstag und Bekanntmachung des Hinweises auf die Patenterteilung: **26.11.2008**
(21) Anmeldenummer: 05815998.9
(22) Anmeldetag: 02.12.2005
(51) Int. Cl.: G05B 7/02

(54) **REGELEINRICHTUNG**
CONTROLLING SYSTEM
DISPOSITIF DE REGULATION

(30) Priorität: 02.12.2004 DE 102004058328
(43) Veröffentlichungstag der Anmeldung: 15.08.2007
(73) Patentinhaber: AREVA NP GmbH, 91052 Erlangen (DE)
(72) Erfinder: MOROKHOVSKYI, Victor, 91056 Erlangen (DE)
(74) Vertreter: Tergau & Pohl Patentanwälte
(86) Internationale Anmeldenummer: PCT/EP2005/012898
(87) Internationale Veröffentlichungsnummer: WO 2006/058769

(56) Entgegenhaltungen:
- US-A- 5 148 364
- US-A1- 2004 046 522

## Beschreibung

Die Erfindung bezieht sich auf eine Regeleinrichtung mit einer Mehrzahl von datenseitig parallel geschalteten Reglerbausteinen, die ausgangsseitig über eine Umschalteinheit mit einem gemeinsamen Signalausgang verbunden sind.

In industriellen Regeleinrichtungen ist üblicherweise, beispielsweise aus Redundanz- oder Sicherheitsgründen oder auch zur Bereitstellung einer Mehrzahl alternativer Steuer- oder Regelvorgänge, zur Bereitstellung eines Regelsignals eine Mehrzahl von datenseitig parallel geschalteten Reglerbausteinen vorgesehen. Diese Reglerbausteine sind ausgangsseitig über eine Umschalteinheit mit einem gemeinsamen Signalausgang verbunden, wobei über die Umschalteinheit die gezielte Auswahl jeweils einer der Reglerbausteine zur Bereitstellung des Ausgangssignals erfolgen kann. Je nach Prozessablauf ist dabei üblicherweise vorgegeben, welcher der Reglerbausteine in einem jeweiligen Betriebszustand gerade aktiv sein soll. Auch die einfachsten Regeleinrichtungen weisen üblicherweise zumindest zwei derartige, durch alternative Reglerbausteine vorgegebene, gezielt anwählbare Regelkanäle auf, wobei beispielsweise zwischen den beiden Betriebsarten "automatische Regelung" und "manuelle Regelung" unterschieden werden kann. In derartigen Fällen ist alternativ zu einer automatisierten Regelung auch durch gezielte Anwahl des Kanals "manuelle Regelung" (auch Steuerung oder "open-loop"-Regelung genannt) durch gezielten Eingriff von außen die Vorgabe eines Wertes möglich. Darüber hinaus kann innerhalb einer Regeleinrichtung eine große Vielzahl alternativer Regelkanäle vorgesehen sein, die sich beispielsweise hinsichtlich der internen Prozessabläufe oder individuell vorgegebener Betriebsparameter unterscheiden können. Schließlich kann sogar eine Umschaltung zwischen Reglerbausteinen vorgesehen sein, die jeweils verschiedene Prozessvariablen regeln.

Das Dokument US2004/046522 beschreibt eine Regeleinrichtung mit einer Mehrzahl von datenseitig parallel geschalteten Reglerbausteinen, die ausgangsseitig über eine Umschalteinheit mit einem gemeinsamen Signalausgang verbunden sind.

Beim Umschalten zwischen verschiedenen Betriebsarten erfolgt in einer derartigen Regeleinrichtung durch Betätigung der Umschalteinheit die signalseitige Tren-nung des jeweils gerade aktiven Reglerbausteins vom Signalausgang und die damit einhergehende signalseitige Verbindung eines alternativen Reglerbausteins mit dem Signalausgang. Aus betrieblichen Gründen kann bei einer derartigen Umschaltung jedoch nicht immer sichergestellt werden, dass der abzuschaltende Reglerbaustein und der neu zuzuschaltende Reglerbaustein zum Umschaltzeitpunkt exakt das gleiche Ausgangssignal aufweisen, da aufgrund der möglichen Verschiedenartigkeit der in den Reglerbausteinen ablaufenden Prozesse geringfügige Signaldifferenzen auftreten können. Derartige Signaldifferenzen können sogar vergleichsweise groß sein, da der neu zuzuschaltende Reglerbaustein vor dem Zeitpunkt der Umschaltung sich nicht in einem geschlossenen Regelkreis befindet und daher möglicherweise die Tendenz besitzt, zu einer Anschlagposition "wegzulaufen". Erst recht treten Signalabweichungen auf, falls den Reglerbausteinen unterschiedliche Regelgrößen zugeordnet sind. Falls eine derartige Signalabweichung zwischen Reglerbausteinen beim Umschalten auftritt, erfährt das Ausgangssignal bei der Umschaltung einen so genannten Signalsprung. Im Hinblick auf betriebliche Erfordernisse oder mögliche Stabilitätskriterien können derartige Signalsprünge ausgesprochen unerwünscht sein.

Um zur Vermeidung eines derartigen Signalsprungs beim Umschalten zwischen verschiedenen Reglerbausteinen eine so genannte "stoßfreie Umschaltung" zu ermöglichen, die eine deutlich erhöhte regeltechnische Zuverlässigkeit der Regeleinrichtung insgesamt gewährleistet, können grundsätzlich die Konzepte der Ablösung oder des Abgleichs vorgesehen sein. Im Falle der Ablösung werden die Ausgänge der einzelnen Reglerbausteine nicht geschaltet, sondern über ein Minimal- oder Maximal-Glied an den Ausgangskanal weitergegeben. Bei einer derartigen Schaltung erfolgt die Umschaltung immer stoßfrei. Die Anwendung eines derartigen Konzepts ist allerdings vergleichsweise stark eingeschränkt, da der Minimal- oder Maximal-Baustein am Signalausgang die Umschaltregel vollständig definiert. Die Realisierung einer Umschaltung nach einer beliebigen gewünschten Regel, die weder minimal noch maximal ist, ist dabei nicht möglich. Zudem ist das Konzept der Ablösung in den meisten Fällen der regeltechnischen Anwendungen zu langsam, da der "ablösende" Reglerbaustein eine "Strecke" durchlaufen muss, bis die Ablösung stattfinden kann. Aus diesem Grund ist gerade bei industriellen Anwendungen von Regeleinrichtungen das Konzept der Ablösung nicht sonderlich verbreitet.

Alternativ kann der so genannte "Abgleich" zum Einsatz kommen, der eine Umschaltung nach einem beliebigen Kriterium, gebildet von der so genannten "Umschaltlogik", erlaubt. Bei einer derartigen Verschaltung kann das Ausgangssignal eines ersten Reglerbausteins bedarfsweise als zusätzliches Eingangssignal auf einen alternativen, nunmehr zu schaltenden Reglerbaustein aufgeschaltet und dabei bei diesem berücksichtigt werden. Bei einer derartigen Verschaltung ist jedoch die wechselseitige optionale Beaufschlagung sämtlicher Regelbausteine mit den Ausgangssignalen sämtlicher anderer Regelbausteine erforderlich. Ein derartiges Konzept weist aus diesem Grund gerade bei der Parallelschaltung einer Vielzahl von Reglerbausteinen eine besonders hohe Komplexität auf, die in einem besonders hohen Herstellungs- oder Projektierungsaufwand resultieren kann.

Zudem ist gerade bei der Realisierung in Analogtechnik mit dem Konzept des Abgleichs der Nachteil verbunden, dass während der Umschaltung kurzeitig ein "Nullsignal" ausgegeben wird. Somit ist eine solche Umschaltung zumindest in analoger Anwendung nicht stoßfrei im engeren Sinne.

Bei einer alternativen Anwendung in einer digitalen Ausführung stellt hingegen jede einzelne Abgleichschaltung eine Signalschleife dar, die in der Digitaltechnik nicht zeitlos sein kann. Derartige Signalschleifen sind in der Digitaltechnik jedoch mit Nachteilen behaftet, da insbesondere bei der Projektierung nicht nur die Richtigkeit der Verschaltung, sondern auch der zeitliche Verlauf der Abgleichsignale berücksichtigt werden muss. Dieses Problem kann noch weiter erschwert werden, falls eine Mehrzahl von Prozessoren verwendet wird, die asynchron zueinander laufen. Gerade bei komplexen Regelsystemen ist dieses Konzept somit ebenfalls nur begrenzt einsetzbar.

Der Erfindung liegt daher die Aufgabe zugrunde, eine Regeleinrichtung der oben genannten Art anzugeben, mit der mit besonders einfachen Mitteln und auf zuverlässige Weise eine stoßfreie Umschaltung zwischen einzelnen Reglerbausteinen ermöglicht ist. Des Weiteren soll ein zum Betreiben einer derartigen Regeleinrichtung besonders geeignetes Verfahren angegeben werden.

Bezüglich der Regeleinrichtung wird diese Aufgabe erfindungsgemäß gelöst, indem der Umschalteinheit datenseitig eine Mehrzahl von jeweils einem der Reglerbausteine zugeordneten Differenziergliedern vor- und ein Integrationsglied nachgeschaltet ist.

Die Regeleinrichtung ist somit dafür ausgelegt, dass die Ausgänge der einzelnen Reglerbausteine zunächst nach der Zeit differenziert, dann umgeschaltet und danach über die Zeit integriert werden, um das Ausgangssignal bereitzustellen. Die Erfindung geht dabei von der Überlegung aus, dass für ein besonders einfach gehaltenes Konzept für eine stoßfreie Umschaltung ein dauernder Querabgleich zwischen einzelnen Reglerbausteinen zur Vermeidung von Signalsprüngen vermieden werden sollte. Stattdessen sollten die Ausgangssignale der Reglerbausteine derart aufbereitet werden, dass statt der möglicherweise mit individuellen Abweichungen oder Sprüngen behafteten eigentlichen Ausgangssignale eher eine allen parallel geschalteten Reglerbausteinen gemeinsame Systematik genutzt werden sollte. Dazu wird aus den von den Reglerbausteinen gelieferten Ausgangssignalen zunächst die zeitliche Ableitung gebildet, die aufgrund der gemeinsamen Systematik für alle Reglerkanäle ein vergleichbares Verhalten aufweisen sollte. Auf der Grundlage dieser zeitlichen Ableitung der eigentlichen Signale kann sodann die Umschaltung erfolgen, wobei nach der Umschaltung durch Bildung des zeitlichen Integrals das eigentliche Ausgangssignal wieder hergestellt wird. Die Effekte der Differenzierung und der nachfolgenden Integrierung heben sich dabei im Wesentlichen auf, wobei das Ausgangssignal bei der Umschaltung keinen Sprung erfährt, da nicht das Signal selber, sondern dessen Ableitung geschaltet wird. Abweichungen zwischen den einzelnen Reglerkanälen oder den Reglern können bei einer derartigen Umschaltung somit allenfalls zu einer Unstetigkeit in der zeitlichen Ableitung des Ausgangssignals führen, die jedoch nicht mit einer Unstetigkeit im eigentlichen Signal einhergeht.

Bei der Auslegung der Regeleinrichtung kann jedem Reglerbaustein ein individuelles, separat gehaltenes Differenzierglied zugeordnet sein. Vorteilhafterweise ist jedoch eines oder jedes der Differenzierglieder in den ihm jeweils zugeordneten Reglerbaustein integriert. Damit kann der Reglerbaustein inklusive des ihm zugeordneten Differenziergliedes in der Art eines modularen Aufbaus als separate Komponente genutzt und im Bedarfsfall direkt mit der nachfolgenden Umschalteinheit verbunden werden.

Gerade für den Fall eines an sich weit verbreiteten PI-Reglers (Proportional-Integral-Regler) als Reglerbaustein kann dabei vorteilhafterweise ein mit einem Differenzierglied versehener Reglerbaustein einerseits einen mit einem Proportionalglied versehenen Proportionalzweig und andererseits einen mit einem Differenzierglied versehenen Differentialzweig umfassen, die ausgangsseitig mit einem gemeinsamen Summierglied verbunden sind. In einer derartigen Ausgestaltung wird somit innerhalb des Reglerbausteins die Summe aus einem Proportionalanteil und aus einem Differentialanteil des Regelsignals gebildet. Bei der der Umschaltung nachfolgenden Integration des Signals entsteht somit als Ausgangssignal ein Signal mit einem Integralanteil (gebildet aus dem zuvor enthaltenen Proportionalanteil) und einem Proportionalanteil (gebildet aus dem zuvor ermittelten Differentialanteil), so dass die herkömmlichen Eigenschaften des Ausgangssignals eines PI-Reglers erhalten sind.

Bezüglich des Verfahrens wird die genannte Aufgabe gelöst, indem der Umschalteinheit als Eingangssignal ein für die zeitliche Ableitung eines Ausgangssignals eines Reglerbausteins charakteristisches Differentialsignal zugeführt wird, aus dem ausgangsseitig der Umschalteinheit durch zeitliche Integration das Ausgangssignal der Regeleinrichtung erzeugt wird.

Vorteilhafterweise wird das Differentialsignal dabei durch zeitliche Ableitung des Ausgangssignals eines Reglerbausteins erzeugt. In alternativer vorteilhafter Ausgestaltung wird, insbesondere zur Nachbildung eines PI-Reglers, das Differentialsignal durch Summierung eines durch die zeitliche Ableitung eines Reglersignals gebildeten ersten Signalbeitrags und eines dem Reglersignal proportionalen zweiten Signalbeitrags gebildet.

Die mit der Erfindung erzielten Vorteile bestehen insbesondere darin, dass durch die zeitliche Differenzierung der Reglersignale mit anschließender zeitlicher Integration im Endeffekt ein im Wesentlichen unverändertes Ausgangssignal erzeugt wird, bei dem sich Differenzierung und Integration an sich aufheben. Durch die zwischen die zeitliche Differenzierung und die zeitliche Integration geschaltete Umschaltung ist jedoch bei der Umschaltung ein Sprung des Signals sicher vermieden, da nicht das Signal, sondern dessen Ableitung geschaltet wird. Somit ist mit besonders einfachen Mitteln und ohne zusätzliche Komplexität bei der Verschaltung der Reglerbausteine miteinander eine tatsächlich stoßfreie Umschaltung zwischen den Reglerbausteinen ermöglicht. Aufgrund des vergleichsweise einfach gehaltenen Konzepts bestehen keine weiteren Einschränkungen bzgl. des Typs der verwendeten Reglerbausteine oder der Umschaltkriterien. Insbesondere ist es nicht erforderlich, die Reglerbausteine mit einer Abgleichfunktion auszurüsten. Zudem sind bei grundsätzlich schnellem Regleraufbau keinerlei Signalschleifen in der Verschaltung erforderlich, wobei beliebige lineare, nicht lineare und/oder adaptive Regler als Reglerbausteine zum Einsatz kommen können.

Ein Ausführungsbeispiel der Erfindung wird anhand einer Zeichnung näher erläutert. Darin zeigen:
- Fig. 1: eine Regeleinrichtung,
- Fig. 2a, 2b: jeweils schematisch einen Reglerbaustein, und
- Fig. 3: eine alternative Ausführungsform einer Regeleinrichtung.

Gleiche Teile sind in allen Figuren mit denselben Bezugszeichen versehen.

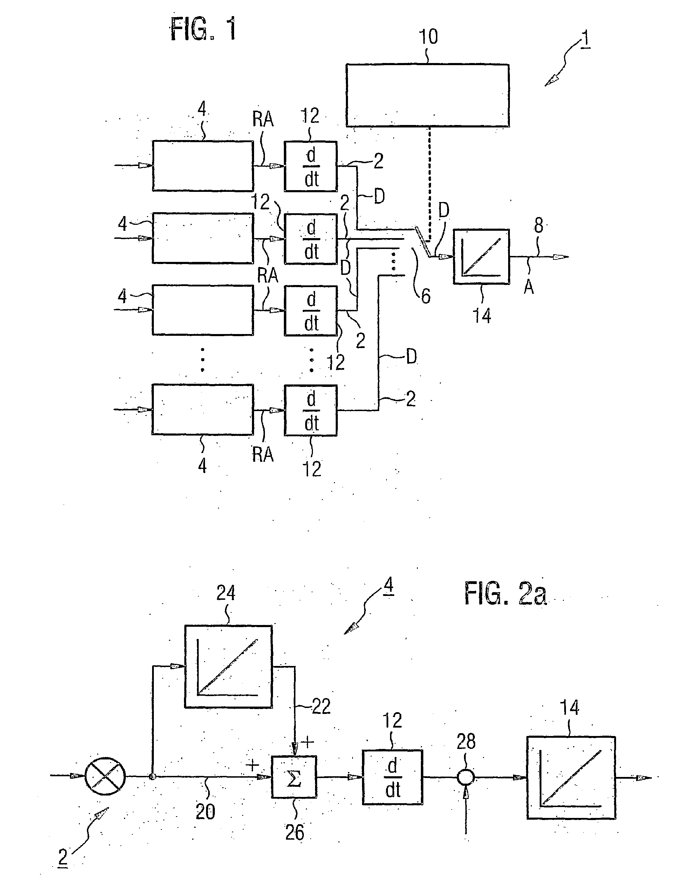

Die Regeleinrichtung 1 gemäß Fig. 1 umfasst in der Art einer mehrkanaligen Ausführung, bei der eine Vielzahl von Regelkanälen 2 datenseitig parallel geschaltet sind, eine Vielzahl von Reglerbausteinen 4, die datenseitig parallel geschaltet und ausgangsseitig über eine Umschalteinheit 6 mit einem gemeinsamen Signalausgang 8 verbunden sind. Die Umschalteinheit 6 ist dabei von einer Umschaltlogik 10 angesteuert. Aufgrund ihres mehrkanaligen Aufbaus eignet sich die Regeleinrichtung insbesondere für industrielle Anwendungen, bei denen bedarfs- und/oder betriebsartabhängig wechselweise jeweils einer der Reglerbausteine 4 aktiv sein soll. Dabei könnte beispielsweise vorgesehen sein, dass einer der Reglerbausteine 4 in der Art einer manuellen Regelung (auch Steuerung oder "Open-loop"-Reglung genannt) für einen manuellen Eingriff von außen ausgelegt sein soll, wobei die verbleibenden Reglerbausteine 4 für eine automatisierte Prozessführung, gegebenenfalls nach voneinander abweichenden Ablaufmustern oder dergleichen, ausgelegt sein können.

Die Regeleinrichtung 1 ist für eine besonders hohe Betriebssicherheit und betriebliche Stabilität ausgelegt. Dabei ist insbesondere dem Umstand Rechnung getragen, dass die Reglerbausteine 4 aufgrund intrinsischer Eigenschaften oder aufgrund verschiedener Regelgrößen und Regelungsfunktionen oder aufgrund der Tatsache, dass nicht im Eingriff befindliche Regler eine Tendenz zum "Weglaufen" besitzen, an ihren Ausgängen mehr oder weniger stark voneinander differierende Ausgangssignale erzeugen könnten. Infolge dessen könnte es beim direkten Umschalten zwischen einzelnen Reglerkanälen 2 oder Reglern zu mehr oder weniger stark ausgeprägten Signalsprüngen am Signalausgang 8 kommen. Um derartige unerwünschte Signalsprünge, die beispielsweise zur Anregung von unerwünschten oder unzulässigen Schwingungen im Regelkreis führen könnten, zu vermeiden, ist die Regeleinrichtung 1 für eine so genannte stoßfreie Umschaltung, bei der derartige Signalsprünge gerade ausgeschlossen sein sollen, ausgelegt.

Um dies mit besonders einfachen Mitteln zu erreichen, ist in der Regeleinrichtung 1 jeder Regelkanal 2 jeweils mit einem Differenzierglied 12 versehen, das dem jeweiligen Reglerbaustein 4 zugeordnet und datenseitig zwischen diesen und die Umschalteinheit 6 geschaltet ist. Zusätzlich ist der Umschalteinheit 6 datenseitig ein Integrationsglied 14 nachgeschaltet.

Bei dieser Schaltung wird somit beim Betrieb der Regeleinrichtung 1 in jedem Reglerkanal 2 das vom jeweiligen Reglerbaustein 4 ausgegebene Ausgangssignal RA im jeweils zugeordneten Differenzierglied 12 zunächst zeitlich differenziert und dabei in ein Differentialsignal D umgewandelt. Das Differentialsignal D wird sodann auf die Umschalteinheit 6 gegeben, wo bedarfsweise eine Umschaltung zwischen einzelnen Reglerkanälen 2 erfolgen kann. Die Umschalteinheit 6 gibt dabei vom jeweils als aktiv ausgewählten Reglerkanal 2 das von diesem eingespeiste Differentialsignal D ausgangsseitig weiter. Dieses weitergegebene Differentialsignal D wird anschließend im nachgeschalteten Integrationsglied 14 über die Zeit integriert. Das Ergebnis dieser Operation wird als Ausgangssignal A auf den Signalausgang 8 gegeben. Bei dieser Betriebsweise der Regeleinrichtung 1 heben sich die Differenzierung und nachfolgende Integration des Ausgangssignals RA des jeweiligen Reglerbausteins 4 auf, so dass das von der Regeleinrichtung 1 erzeugte Ausgangssignal A im Wesentlichen durch diese Operationen unverändert bleibt. Allerdings erfolgt die Umschaltung zwischen Reglerkanälen 2 in der Umschalteinheit 6 nicht am eigentlichen Ausgangssignal RA der Reglerbausteine 4, sondern an dessen durch das Differentialsignal D repräsentierter zeitlicher Ableitung. Damit wirken sich Abweichungen in den Ausgangssignalen RA der Reglerbausteine 4 zueinander nicht aus, und das Ausgangssignal A erfährt bei der Umschaltung keinen Sprung. Die Umschaltung ist damit stoßfrei im engeren Sinne.

Das auf der Umschaltung der zeitlichen Ableitung des Ausgangssignals RA der Reglerbausteine 4 mit nach der Umschaltung erfolgender zeitlicher Integration basierende Konzept bedingt grundsätzlich keine Einschränkungen hinsichtlich des Typs der verwendeten Regler oder der Umschaltkriterien. Insbesondere ist es nicht erforderlich, dass die umzuschaltenden Reglerbausteine 4 über Abgleichfunktionen oder dergleichen verfügen müssen. Insbesondere können die weit verbreiten Regler vom Typus P (proportional), I (integral), PI, PD (proportional-differential), PID oder auch beliebige lineare, nicht lineare oder adaptive Regler mit besonders geringem aperativem und konstruktivem Aufwand stoßfrei umgeschaltet werden, ohne dass Signalschleifen erforderlich wären. Die Regler, zwischen denen umgeschaltet wird, müssten zudem noch nicht einmal vom gleichen Typ sein. Vielmehr könnten sie sogar jeweils verschiedene Prozess- oder Regelgrößen regeln. Zum Beispiel könnte einer der Regler ein Stromregler und ein anderer Regler ein Spannungsregler sein.

Bei den Reglerbausteinen 4 kann es sich um PI-(Proportional-Integral)-Regler handeln, wie dies schematisch und beispielhaft in Fig. 2a gezeigt ist. Dabei umfasst der Reglerbaustein 4 einen Proportionalkanal 20 und einen diesem datenseitig parallel geschalteten Integralkanal 22, in den ein Integrationsglied 24 geschaltet ist. Ausgangsseitig sind der Proportionalkanal 20 und der Integralkanal 22 mit einem gemeinsamen Summierglied 26 verbunden, indem die Summe der beiden Teilsignale gebildet wird. Diesem ist ausgangsseitig das Differenzierglied 12 nachgeschaltet, das seinerseits ausgangsseitig, wie durch den Umschaltpunkt 28 angedeutet, mit der Umschalteinheit 6 verbunden ist. Bei entsprechender "aktiver" Einstellung in der Umschalteinheit 6 ist der damit gebildete Reglerkanal 2 mit dem nachgeschalteten Integrationsglied 14 verbunden. Beim Aufbau gemäß Fig. 2a ist somit ein in konventioneller PI-Bauweise ausgestalteter Reglerbaustein 4 mit einem im Wesentlichen separat gehaltenen Differenzierglied 12 zur Bildung des jeweiligen Reglerkanals 2 verbunden.

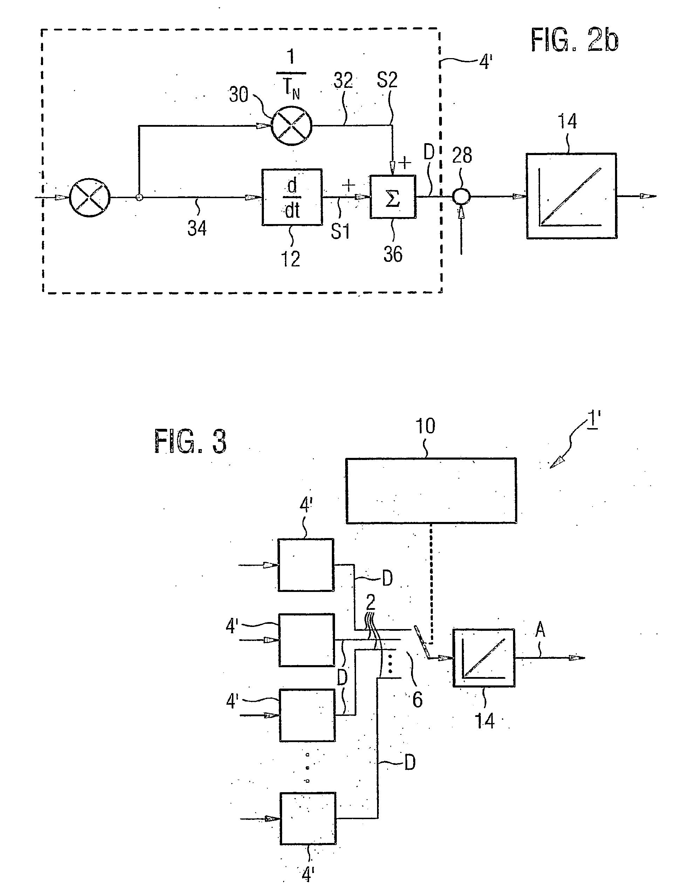

Ein hinsichtlich seiner regeltechnischen Eigenschaften gleichwertiges System kann bereitgestellt werden, indem das Differenzierglied 12 in den ihm jeweils zugeordneten Reglerbaustein 4 integriert ist. Ein Ausführungsbeispiel für eine derartige Anordnung anhand eines PI-Reglers ist in Fig. 2b dargestellt. Dabei umfasst der mit dem Differenzierglied 12 versehene Reglerbaustein 4 einerseits ein mit einem Proportionalglied 30 versehenen Proportionalzweig 32 und andererseits einen mit dem Differenzierglied 12 versehenen Differentialzweig 34. Der Proportionalzweig 32 und der Differentialzweig 34 sind ausgangsseitig mit einem gemeinsamen Summierglied 36 verbunden. In dieser Ausgestaltung wird somit das für die zeitliche Ableitung des Ausgangssignals RA des Reglerbausteins 4 charakteristische Differentialsignal D durch die Summierung eines durch die zeitliche Ableitung eines Reglersignals gebildeten ersten Signalbeitrags S1 und eines dem Reglersignal proportionalen zweiten Signalbeitrags S2 gebildet. Das somit ausgegebene Differentialsignal D wird entsprechend der oben beschriebenen Ausgestaltung dem über den Umschaltpunkt 28 charakterisierten Umschalteinheit 6 zugeführt und bedarfs- und betriebsartabhängig an das nachgeschaltete Integrationsglied 14 weitergegeben.

Ein Ausführungsbeispiel für eine aus derartigen, jeweils bereits mit einem integrierten Differenzierglied versehenen Reglerbausteinen 4' gebildete Regeleinrichtung 1' ist in Fig. 3 gezeigt. Unter Beibehaltung des Konzepts, dass die Umschaltung zwischen Reglerkanälen oder Reglern hinsichtlich der Ableitung des eigentlichen Reglersignals erfolgen sollte, wobei eine anschließende zeitliche Integration vorgesehen ist, sind in dieser Ausführungsform die ohnehin ein Differentialsignal D als Ausgangssignal liefernden Reglerbausteine 4' direkt mit der Umschalteinheit 6 verbunden. Dieser ist wiederum das Integrationsglied 14 zur Bildung des eigentlichen Ausgangssignals A nachgeschaltet.

### Bezugszeichenliste

- 1, 1': Regeleinrichtung
- 2: Regelkanäle
- 4, 4': Reglerbausteine
- 6: Umschalteinheit
- 8: Signalausgang
- 10: Umschaltlogik
- 12: Differenzierglied
- 14: Integrationsglied
- 20: Proportionalkanal
- 22: Integralkanal
- 24: Integrationsglied
- 26: Summierglied
- 28: Umschaltpunkt
- 30: Proportionalglied
- 32: Proportionalzweig
- 34: Differentialzweig
- 36: Summierglied

- A: Ausgangssignal
- D: Differentialsignal
- RA: Ausgangssignal
- S1, S2: Signalbeiträge

## Patentansprüche

1. Regeleinrichtung (1, 1') mit einer Mehrzahl von datenseitig parallel geschalteten Reglerbausteinen (4, 4'), die ausgangsseitig über eine Umschalteinheit (6) mit einem gemeinsamen Signalausgang (8) verbunden sind, **dadurch gekennzeichnet, dass** der Umschalteinheit (6) datenseitig eine Mehrzahl von jeweils einem der Reglerbausteine (4, 4') zugeordneten Differenziergliedern (12) vor- und ein Integrationsglied (14) nachgeschaltet ist.

2. Regeleinrichtung (1, 1') nach Anspruch 1, bei der eines oder jedes der Differenzierglieder (12) in den ihm jeweils zugeordneten Reglerbaustein (4, 4') integriert ist.

3. Regeleinrichtung (1, 1') nach Anspruch 2, bei der zumindest ein mit einem Differenzierglied (12) versehener Reglerbaustein (4, 4') einerseits einen mit einem Proportionalglied (30) versehenen Proportionalzweig (32) und andererseits einen mit einem Differenzierglied (12) versehenen Differentialzweig (34) umfasst, die ausgangsseitig mit einem gemeinsamen Summierglied (26) verbunden sind.

4. Verfahren zum Betreiben einer Regeleinrichtung (1, 1') mit einer Mehrzahl von datenseitig parallel geschalteten Reglerbausteinen (4, 4'), die ausgangsseitig über eine Umschalteinheit (6) mit einem gemeinsamen Signalausgang (8) verbunden sind, bei dem der Umschalteinheit (6) als Eingangssignal ein für die zeitliche Ableitung eines Ausgangssignals (A, RA) eines Reglerbausteins (4, 4') charakteristisches Differentialsignal (D) zugeführt wird, aus dem ausgangsseitig der Umschalteinheit (6) durch zeitliche Integration das Ausgangssignal (A) der Regeleinrichtung (1, 1') erzeugt wird.

5. Verfahren nach Anspruch 4, bei dem das Differentialsignal (D) durch zeitliche Ableitung des Ausgangssignals (RA) eines Reglerbausteins (4, 4') erzeugt wird.

6. Verfahren nach Anspruch 4, bei dem das Differentialsignal (D) durch Summierung eines durch die zeitliche Ableitung eines Reglersignals gebildeten ersten Signalbeitrags (S1) und eines dem Reglersignal proportionalen zweiten Signalbeitrags (S2) gebildet wird.

## Claims

1. Control system (1, 1') with a plurality of controller modules (4, 4') connected in parallel on the data side and coupled on the output side to a common signal output (8) via a switch-over unit (6), **characterized in that** a plurality of differential elements (12), each of which is allocated to one of the controller modules (4, 4'), are connected upstream of the switch-over unit (6) and that an integration unit is connected downstream of the switch-over unit (6), on the data side.

2. Control system (1, 1') according to claim 1, wherein one or each of the differential elements (12) is integrated in the controller module (4, 4') allocated to it.

3. Control system (1, 1') according to claim 2, wherein at least one controller module (4, 4') provided with a differential element (12) comprises on the one hand a proportional branch (32) provided with a proportional element (30) and on the other hand a differential branch (34) provided with a differential element (12), connected on the output side by a common summing element (26).

4. Method for operating a control system (1, 1') with a plurality of controller modules (4, 4') connected in parallel on the data side and coupled on the output side with a common signal output (8) via a switch-over unit (6), a differential signal (D) which is characteristic of the time derivative of an output signal (A, RA) of a controller module (4, 4') being supplied to the switch-over unit (6) as an input signal, the output signal (A) of the controller module (4, 4') being generated from said differential signal (D) on the output side of the switch-over unit (6) through time integration.

5. Method according to claim 4, wherein the differential signal (D) is generated through time derivation of the output signal (RA) of a controller module (4, 4').

6. Method according to claim 4, wherein the differential signal (D) is formed by summing a first signal contribution (S1) formed by the time derivative of a controller signal and a second signal contribution (S2) proportional to the controller signal.

## Revendications

1. Dispositif de réglage (1, 1') avec une pluralité de modules régulateurs (4, 4') connectés en parallèle du côté des données et raccordés du côté de sortie à une sortie de signal (8) commune au moyen d'une unité commutatrice (6), **caractérisé en ce qu'**une pluralité d'éléments différenciateurs (12), dont chacun est affecté à une des modules régulateurs (4, 4'), sont monté en amont de l'unité commutatrice (6) et qu'une unité d'intégration est montée en aval de l'unité commutatrice (6), du côté des données.

2. Dispositif de réglage (1, 1') selon la revendication 1, dans lequel un ou chacun des éléments différenciateurs (12) est intégré dans le module régulateur (4, 4') affecté à lui.

3. Dispositif de réglage (1, 1') selon la revendication 2, dans lequel au moins un module régulateur (4, 4') muni d'un élément différenciateur (12) comprends, d'un côté, une branche proportionnelle (32) munie d'un élément proportionnel (30) et, d'un autre côté, une branche différentielle (34) munie d'un élément différentiel (12), raccordés du côté de sortie par un élément totalisateur commun (26).

4. Méthode pour opérer un dispositif de réglage (1, 1') avec une pluralité de modules régulateurs (4, 4') connectés en parallèle du côté des données et raccordés du côté de sortie à une sortie de signal (8) commune au moyen d'une unité commutatrice (6), un signal différentiel (D) qui est caractéristique de la dérivée par rapport au temps d'un signal de sortie (A, RA) d'un module régulateur (4, 4') étant alimenté à l'unité commutatrice (6) comme un signal d'entrée, le signal de sortie (A) du module régulateur (4, 4') étant généré par le signal différentiel (D) du côté de sortie de l'unité commutatrice (6) au moyen d'une intégration par rapport a temps.

5. Méthode selon la revendication 4, dans lequel le signal différentiel (D) est généré au moyen d'une dérivée par rapport au temps du signal de sortie (RA) d'un module régulateur (4, 4').

6. Méthode selon la revendication 4, dans lequel le signal différentiel (D) est formé en sommant une première contribution de signal (S1) formée par la dérivée par rapport au temps d'un signal régulateur et une seconde contribution de signal (S2) qui est proportionnelle au signal régulateur.
